# NEW EUROPEAN PATENT SPECIFICATION

(11) **EP 1 978 707 B2**
(45) Date of publication and mention of the opposition decision: **18.01.2017**
(45) Mention of the grant of the patent: 01.05.2013
(21) Application number: 07710848.8
(22) Date of filing: 26.01.2007
(51) Int. Cl.: H04L 29/06

(54) **A METHOD AND SYSTEM FOR GENERATING AND ACQUIRING THE RIGHTS OBJECT AND THE RIGHTS ISSUING CENTER**
VERFAHREN UND SYSTEM ZUM ERZEUGEN UND BESCHAFFEN DES RECHTEOBJEKTS UND DER RECHTEAUSGABEZENTRALE
PROCÉDÉ ET SYSTÈME POUR LA GÉNÉRATION ET L'ACQUISITION DE DROITS D'AUTEURS ET CENTRE D'OCTROI DE DROITS

(30) Priority: 26.01.2006 CN 200610033422
(43) Date of publication of application: 08.10.2008
(73) Proprietor: Huawei Technologies Co., Ltd., Longgang District Shenzhen, Guangdong 518129 (CN)
(72) Inventor: LI, Jincheng, Guangdong 518129 (CN); YAN, Jun, Guangdong 518129 (CN); WU, Xiangyang, Guangdong 518129 (CN)
(74) Representative: Körber, Martin Hans
(86) International application number: PCT/CN2007/000298
(87) International publication number: WO 2007/087749

(56) References cited:
- WO-A1-2005/104519
- CN-A- 1 642 083
- US-A1- 2002 087 885
- OPEN MOBILE ALLIANCE: "DRM Specification - Candidate Version 2.0 (OMA-DRM-DRM-V2_0-20040716-C)" INTERNET CITATION, [Online] XP002337407 Retrieved from the Internet: URL:http://www.openmobilealliance.org/rele ase_program/docs/DRM/V2_0-20040 715-C/OMA-DRM-V2_0-20040716-C.pdf> [retrieved on 2005-07-22]
- OPEN MOBILE ALLIANCE: "SIP/SIMPLE Presence Specification, OMA-PAG-SIMPLE-Spec-V1_0_0-20041118-D" INTERNET CITATION, [Online] 18 November 2004 (2004-11-18), XP002376929 Retrieved from the Internet: URL:http://member.openmobilealliance.org/f tp/Public_documents/PAG/Permane nt_documents/OMA-PAG-SIMPLE-Spec-V1_0_0-20 041118-D.zip> [retrieved on 2006-04-12]
- OPEN MOBILE ALLIANCE: "Utilization of IMS capabilities Architecture" OPEN MOBILE ALLIANCE, 9 August 2005 (2005-08-09), pages 1-33, XP002422111
- OPEN MOBILE ALLIANCE: "Mobile Broadcast Services Architecture - Draft Version 1.0 - OMA -AD- BCAST-V1 0-20050420-D", INTERNET CITATION, 20 April 2005 (2005-04-20), XP002418066, Retrieved from the Internet: URL:http://member.openmobilealliance.org/f tp/Public_documents/BAC/BCAST/Permanent_do cuments/OMA-AD_BCAST-V1_0_2_20050420-D.zip [retrieved on 2007-01-29]

## Description

The present invention relates to the communications field, in particular, to a method, a system and a rights issuer for generating and acquiring rights objects.

### BACKGROUND

The streaming media service is a new service emerging in recent years. It utilizes a streaming transmission technology to transmit multimedia files including video and audio files in a packet switching network. These multimedia files can be played while being downloaded. A key technology used in the streaming media service is the streaming transmission technology, which processes continuous video and audio information into video and audio files and then uploads these files to a website server so that users can watch the video and listen to the audio while downloading these files. To play these files, users do not need to wait for these files to be completely downloaded to their computers.

In an IP Multimedia Subsystem (IMS) defined by 3GPP R5/R6 standards, an IP packet domain is used as the bearer channel for control signaling and media, using a Session Initiation Protocol (SIP) as call control signaling to separate service management, session control and bearer access from one another.

Deploying the streaming media service based in an IMS can make full use of the existing features of the IMS network and reuse the functions such as authentication and accounting of the IMS network architecture, so that the streaming media service can be quickly and efficiently deployed.

Protecting the content of multimedia files is an important issue to be considered for the streaming media service. At present, Digital Rights Management (DRM) is an important way for protecting the content of multimedia files. Through the DRM technology, the content and rights object of multimedia files are encrypted and transmitted to terminals, offering abundant content management means and more profit models for operators. The rights object of a multimedia file includes the subscription right of users and the encryption key of the multimedia file content. Because the rights object includes the encryption key of the multimedia file content, the generation and secure acquisition of the rights object is of vital importance.

When a terminal sends a rights object request to a rights issuer, the rights issuer authenticates the terminal. In a DRM system, usually a Rights Object Acquisition Protocol (ROAP) is used as the protocol for authenticating and acquiring a rights object. At present, no solution is available for acquiring a rights object via an IMS network. An internet citation identified as "XP002337407", and named as "DRM Specification-Candidate Version 2.0" describes a ROAP suite. The ROAP is the common name for a suite of DRM security protocols between a Right Issuer (RI) and a DRM Agent in Device.
An internet citation identified as "XP002418066", and named as "Mobile Broadcast Services Architecture-Draft Version 1.0 -OMA -AD-BCAST-V10-20050420-D" describes a architecture for the Mobile Broadcast service enablers based on the requirements listed for the BCAST Requirement documents.

### SUMMARY

The present invention provides a method, a system and a rights issuer for generating and acquiring rights objects, so that rights objects can be acquired via an IMS network.

A method for generating and acquiring rights objects according to an embodiment of the present invention, includes the following steps: a rights issuer obtains the online state information of a terminal via an IP Multimedia Subsystem (IMS) and obtains the service right information of the terminal after determining that the terminal is online; the rights issuer generates a rights object and issues the rights object to the terminal.

The method for generating and acquiring rights objects according to an embodiment of the present invention includes the following steps: a rights issuer receives a request for a rights object via an IMS from a terminal and obtains the service right information of the terminal; the rights issuer generates a rights object and issues the rights object to the terminal.

A system for generating and acquiring rights objects according to an embodiment of the present invention, includes a Proxy Call Session Control Function (P-CSCF), a Serving Call Session Control Function (S-CSCF) and a service configuration information server, in addition to a rights issuer and a terminal.

The P-CSCF is configured to receive a request for a rights object from the terminal and forward the request to the S-CSCF.

The S-CSCF is configured to trigger the rights issuer to process the request it has received.

The service configuration information server is connected tooth the rights issuer and the S-CSCF, and configured to store relevant service configuration information.

The rights issuer is configured to receive the request for a rights object, generate the rights object and then issue the rights object to the terminal.

The system for generating and acquiring rights objects according to an embodiment of the present invention includes a Proxy Call Session Control Function (P-CSCF), a Serving Call Session Control Function (S-CSCF) and a service configuration information server, in addition to a rights issuer and a terminal.

The P-CSCF is configured to receive a request for a rights object from the terminal and forward the request to the S-CSCF.

The S-CSCF is configured to send the received request to an application server.

The application server is configured to forward the request to the rights issuer, and also return a trigger object and a rights object that the rights issuer generates and return plus the other information in the service request to the terminal.

The service configuration information server is connected to all of the application server, the S-CSCF and the rights issuer, and configured to store relevant service configuration information.

The rights issuer acting as a service support entity for the application server is configured to generate the rights object after receiving a request for a rights object and issue the rights object to the terminal.

A rights issuer according to an embodiment of the present invention, including a service right information acquisition unit, a rights object generation unit, and a rights object issuing unit.

The service right information acquisition unit is configured to acquire service right information from a service configuration information server in an IMS according to an indication it has received.

The rights object generation unit is configured to generate a rights object according to the service right information and a content encryption key it obtains.

The rights object issuing unit is configured to issue the rights object.

According to the embodiments of the present invention, the rights issuer obtains a user request or the online state information of a user via the IMS. The generation and acquisition of rights objects is implemented as a service function or service support function. The rights issuer is deployed as an application server or as a service support entity for an application server. Therefore, the existing entities and operating mechanisms of the IMS network are fully utilized, and an optimized method and an optimized system are provided for generating and acquiring rights objects according to the present invention. The method and the system for generating and acquiring rights objects are easy to be implemented and universal.

### BRIEF DESCRIPTION OF THE DRAWINGS

Figure 1 shows a network architecture of a system for generating and acquiring rights objects according to the first embodiment of the present invention;
Figure 2 shows a network architecture of a system for generating and acquiring rights objects according to the second embodiment of the present invention;
Figure 3 shows a network architecture of a system for generating and acquiring rights objects according to the third embodiment of the present invention;
Figure 4 shows a flowchart of a method for generating and acquiring rights objects according to the first embodiment of the present invention;
Figure 5 shows a flowchart of a method for generating and acquiring rights objects according to the second embodiment of the present invention;
Figure 6 shows a flowchart of a method for generating and acquiring rights objects according to the third embodiment of the present invention;
Figure 7 shows a flowchart of a method for generating and acquiring rights objects according to the fourth embodiment of the present invention;
Figure 8 shows a flowchart of a method for generating and acquiring rights objects according to the fifth embodiment of the present invention; and
Figure 9 shows a flowchart of a method for generating and acquiring rights objects according to the sixth embodiment of the present invention.

### DETAILED DESCRIPTION

In an IMS network, session control is separated from service management and thus services are easy to deploy and apply. According to the embodiments of the present invention, the generation and acquisition of rights objects is implemented as a service function or as a service support function. Therefore, a rights issuer is deployed as an application server or as a service support entity for an application server. In this way, the existing entities and operating mechanisms of the IMS network are fully utilized.

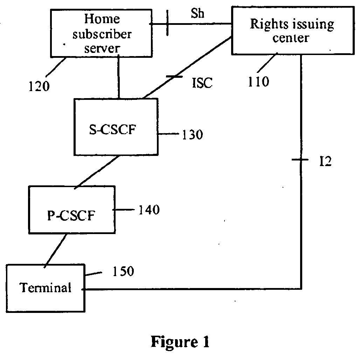

As shown in Figure 1, in a system for generating and acquiring rights objects according to the first embodiment of the present invention, a rights issuer is deployed as an application center to receive a request for a rights object from a terminal, generate the rights object and send the rights object to the terminal. The system for generating and acquiring rights objects according to the first embodiment of the present invention includes a rights issuer 110, a home subscriber server 120, a Serving Call Session Control Function (S-CSCF) 130, a Proxy Call Session Control Function (P-CSCF) 140, and a terminal 150. The terminal 150 sends a request for a rights object to the rights issuer 110. The request is transmitted via the P-CSCF 140 to the S-CSCF 130. The S-CSCF 130 sends the request via an ISC interface according to the preset trigger rules to the rights issuer 110. Both the rights issuer 110 and the S-CSCF 130 are connected to the home subscriber server 120. The home subscriber server 120 stores relevant service configuration information. The rights issuer 110 is connected via an I2 interface to the terminal 120 and is connected via an Sh interface to the home subscriber server 120. The I2 interface is an interface between a rights issuer and a terminal in a conventional DRM system, and uses a Rights Object Acquisition Protocol (ROAP).

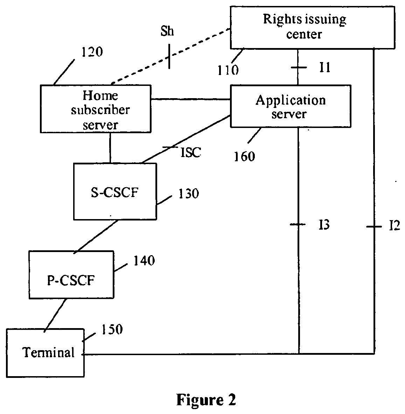

As shown in Figure 2, in a system for generating and acquiring rights object according to the second embodiment of the present invention, a rights issuer is deployed as a service support entity for an application server. The rights issuer generates the rights objects after receiving a request for a rights object from a terminal and issues the rights object to the terminal. The second embodiment of the present invention differs from the first embodiment of the present invention in that the request of a terminal for a rights object is forwarded via an application server to the rights issuer. In the second embodiment of the present invention, the application server forwards the request for a rights object and the response between the terminal and the rights issuer. The rights issuer sends a request for the service right information of the terminal via an Sh interface to a home subscriber server so as to generate the requested rights object.

The system for generating and acquiring rights objects according to the second embodiment of the present invention includes a rights issuer 110, an application server 160, a home subscriber server 120, a Serving Call Session Control Function (S-CSCF) 130, a Proxy Call Session Control Function (P-CSCF) 140, and a terminal 150. The terminal 150 sends a request for a rights object to the rights issuer 110. The request is transmitted via the P-CSCF 140 to the S-CSCF 130. The S-CSCF 130 sends the request via an ISC interface according to the present trigger rules to the application server 160. The application server 160 forwards the request via an I1 interface to the rights issuer 110. The application server 160 may return a trigger object and a rights object that the rights issuer 110 generates and returns plus the other information in the service request to the terminal 150. The application server 160, the S-CSCF 130 and the rights issuer 110 are all connected to the home subscriber server 120. The home subscriber server 120 stores relevant service configuration information. The application server 160 is connected via an I3 interface to the terminal 150. The terminal 150 may directly send a service request via the I3 interface to the application server 160. The rights issuer 110 is connected via an Sh interface to the home subscriber server 120 and is connected via an I2 interface to the terminal 150. The I2 interface is an interface between a rights issuer and a terminal in a conventional DRM system, and uses a Rights Object Acquisition Protocol (ROAP).

In the system for generating and acquiring rights objects according to the first and second embodiments of the present invention, the trigger rules are the rules to trigger the rights object determined by the subscription information of the user or the default trigger rules.

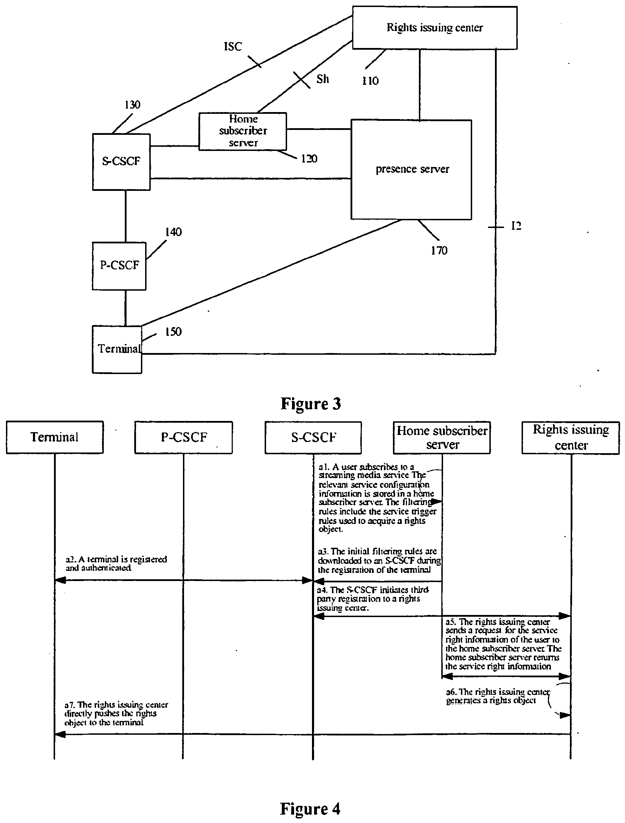

As shown in Figure 3, the system for generating and acquiring rights objects according to the third embodiment of the present invention differs from the system for generating and acquiring rights objects according to the first embodiment of the present invention in that the system further includes a presence server 170. The presence server 170 is connected to the rights issuer 110, the home subscriber server 120, the S-CSCF 130 and the terminal 150. The presence server 170 obtains the online state of users and notifies the state information of users to the rights issuer.

In the system for generating and acquiring rights objects according to the first, second and third embodiments of the present invention, a home subscriber server stores relevant service configuration information. Therefore, the home subscriber server may be replaced by a separate database storing relevant service configuration information or an application server storing relevant service configuration information. The home subscriber server, the separate database and the application server are all called a service configuration informant server. The service configuration informant server may be integrated with an application server that provides services.

The following descriptions are about the first and second embodiments for a method for generating and acquiring rights objects according to the present invention. In the first embodiment of the present invention, a terminal is successfully registered, an S-CSCF successfully initiates third-party registration to a rights issuer, and then the rights issuer pushes a rights object to the terminal. In the second embodiment of the present invention, a rights issuer issues a trigger object to a terminal so as to trigger the terminal to request a rights object from the rights issuer, or the rights issuer does not issue any trigger object but the terminal initiates a rights object request after receiving a media flow.

In the IMS network architecture, a SIP protocol is applied between a terminal and a P-CSCF/S-CSCF and between an S-CSCF and an application server. In order to provide a method for generating and acquiring rights objects according to the present invention, the SIP protocol may be extended for the acquisition of rights objects. Alternatively, a ROAP message may be encapsulated in a SIP tunnel for transmission.

To extend the SIP protocol for the acquisition of rights objects, a new SIP header field such as a new ROAP header field may be added or a new Content-Type such as Content-Type:application/roap may be added to indicate that the message is related to the acquisition of rights objects. For different ROAP messages, different methods may be employed to extend the SIP protocol. For instance, a terminal sends a registration request to a rights issuer; after the terminal is registered, an S-CSCF initiates third-party registration to the rights issuer; the terminal sends a rights object request to the rights issuer through subscription extension. The reply to the rights object request may be returned using a NOTIFY method. The rights issuer may push a rights object using a MESSAGE or INFO method to the terminal.

When a ROAP message is encapsulated in a SIP tunnel to acquire a rights object, the ROAP message can be regarded as a new Content-Type of the SIP protocol. For instance, the Content-Type in the SIP header field may be set as Content-Type:application/roap.

The following descriptions are about the embodiments for a method for generating and acquiring rights objects according to the present invention.

As shown in Figure 4, the method for generating and acquiring rights objects according to the first embodiment of the present invention applies to both the system for generating and acquiring rights objects according to the first embodiment of the present invention and the system for generating and acquiring rights objects according to the second embodiment of the present invention, and includes the following steps:

In step a1, a user subscribes to a streaming media service. The relevant service configuration information is stored in a home subscriber server. The filtering rules include the service trigger rules used to acquire a rights object: When a rights issuer is set as an application server, a rights object request is triggered to the rights issuer; when the rights issuer is deployed as a service support entity for an application server, a rights object request is triggered to the application server of the streaming media service.

In step a2, a terminal is registered and authenticated in the same way as normal registration.

In step a3, the initial filtering rules are downloaded to an S-CSCF during the registration of the terminal.

In step a4, the S-CSCF initiates third-party registration to a rights issuer.

In step a5, the rights issuer sends a request for the service right information of the user to the home subscriber server. The request carries the user identity and the identities of the services the user has subscribed to. Then the home subscriber server returns the service right information to the rights issuer.

In step a6, the rights issuer generates a rights object according to the service right information and the encryption key of the content.

The encryption key of the content may be directly stored in the rights issuer or stored in a key management center, depending on the key management scheme. When the encryption key is stored in the rights issuer, the rights issuer directly obtains the encryption key from the local database according to the content identifier. When the encryption key is stored in a key management center, the rights issuer sends a query message that carries the content identifier to the key management center to query the encryption key of the content of the streaming media service.

In step a7, the rights issuer directly pushes the rights object to the terminal. When the rights issuer is set as an application server, the rights object is forwarded by an S-CSCF and a P-CSCF. When the rights issuer is deployed as a service support entity for an application server, the rights object is forwarded by the application server, the S-CSCF and the P-CSCF. The rights issuer may push the rights object using a MESSAGE or INFO method to the terminal.

After step a4 in the first embodiment of the present invention, the rights issuer may send a trigger object to the terminal and then the terminal may acquire a rights object through a SIP message or may directly acquire a rights object via the ROAP protocol from the rights issuer.

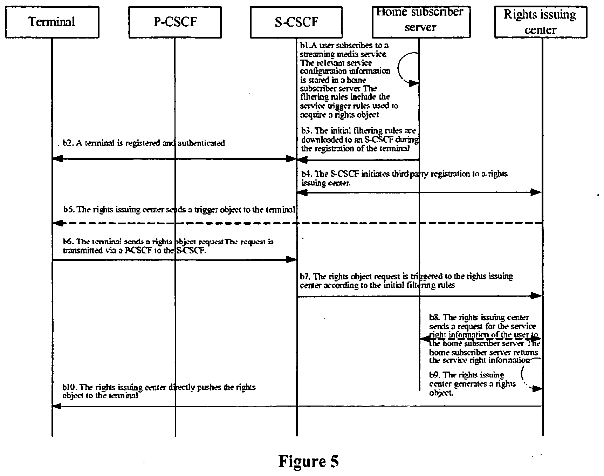

As shown in Figure 5, the method for generating and acquiring rights objects according to the second embodiment of the present invention applies to both the system for generating and acquiring rights objects according to the first embodiment of the present invention and the system for generating and acquiring rights objects according to the second embodiment of the present invention, and includes the following steps:

In step b1, a user subscribes to a streaming media service. The relevant service configuration information is stored in a home subscriber server. The filtering rules include the service trigger rules used to acquire a rights object: When a rights issuer is set as an application server, a rights object request is triggered to the rights issuer; when the rights issuer is deployed as a service support entity for an application server, a rights object request is triggered to the application server of the streaming media service.

In step b2, a terminal is registered and authenticated in the same way as normal registration.

In step b3, the initial filtering rules are downloaded to an S-CSCF during the registration of the terminal.

In step b4, the S-CSCF initiates third-party registration to a rights issuer.

In step b5, if the rights issuer detects that a rights object needs to be issued for the streaming media service the user subscribes to, the rights issuer may send a trigger object to the terminal, according to the specific implementation.

In step b6, the terminal sends a rights object request. The request is transmitted via a P-CSCF to the S-CSCF. If the rights issuer sends a trigger object to the terminal in step b5, the terminal directly sends a rights object request. If the rights issuer does not send a trigger object to the terminal in step b5, the terminal may trigger a rights object request upon receipt of a media flow. The rights object request may be implemented through SIP subscription, that is, in step b6, the terminal may send a rights object request according to the trigger object sent by the rights issuer or may initiate a rights object request.

In step b7, the rights object request is triggered to the rights issuer according to the initial filtering rules.

In step b8, the rights issuer sends a request for the service right information of the user to the home subscriber server. The request carries the user identity and the identities of the services the user has subscribed to. Then the home subscriber server returns the service right information of the user to the rights issuer.

In step b9, the rights issuer generates a rights object according to the service right information and the encryption key of the content.

The encryption key of the content may be directly stored in the rights issuer or stored in a key management center, depending on the key management scheme. When the encryption key is stored in the rights issuer, the rights issuer directly obtains the encryption key from the local database according to the content identifier. When the encryption key is stored in a key management center, the rights issuer sends a query message that carries the content identifier to the key management center to query the encryption key of the content of the streaming media service.

In step b10, the rights issuer directly pushes the rights object to the terminal. When the rights issuer is set as an application server, the rights object is forwarded by an S-CSCF and a P-CSCF. When the rights issuer is deployed as a service support entity for an application server, the rights object is forwarded by the application server, the S-CSCF and the P-CSCF. The rights issuer may push the rights object using a NOTIFY method of the SIP protocol to the terminal.

In the embodiment of the present invention shown in Figure 5, steps b4 and b5 may be omitted. In other words, step b6 directly follows step b3: After the terminal logs in to the IMS and is successfully registered, the terminal initiates a rights object request via the IMS to the rights issuer and then step b7 follows.

In the method for generating and acquiring rights objects according to the first and second embodiments of the present invention, an operating mechanism is fully utilized to trigger a service based on trigger rules between an S-CSCF and an application server. After a terminal is registered, the S-CSCF may initiate third-party registration to the application server. The rights issuer may be deployed as an application server or a service support entity for an application server. The acquisition of a rights object can be implemented by extending the SIP protocol in a ROAP message or encapsulating a ROAP message in a SIP tunnel. Therefore, the present invention provides an easy-to-use and easy-to-implement method for generating and acquiring rights objects.

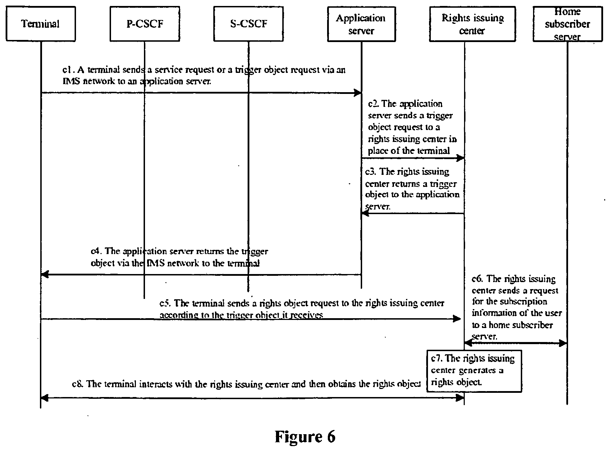

As shown in Figure 6, the method for generating and acquiring rights objects according to the third embodiment of the present invention includes the following steps.

In step c1, a terminal sends a user request via an IMS network to an application server. The user request may be a service request or a request for a trigger object.

In step c2, the application server determines that the terminal requests a trigger object and so sends a trigger object request to a rights issuer in place of the terminal.

If the request received by the application server is a request for a trigger object, the application server determines that the terminal requests a trigger object.

If the request received by the application server is a service request, the application server may determine whether to request the rights issuer to provide a trigger object according to the indication carried in the request from the terminal or according to the attribute of the requested service. If yes, the application server sends a trigger object request to the rights issuer.

In step c3, the rights issuer returns a trigger object to the application server.

In step c4, the application server returns the trigger object via the IMS network to the terminal. The trigger object may be forwarded in a response to the user's request or in a separate SIP message such as MESSAGE or INFO.

In step c5, the terminal sends a rights object request to the rights issuer according to the trigger object it receives.

In step c6, the rights issuer sends a request for the subscription information of the user to a home subscriber server after receiving the rights object request. The request carries the user identity and the identities of the services the user has subscribed to. Then the home subscriber server returns the service right information of the user to the rights issuer.

In step c7, the rights issuer generates a rights object.

In step c8, the terminal interacts with the rights issuer and then obtains the rights object.

In the third embodiment of the present invention, a terminal may acquire a rights object through a SIP message or directly acquire a rights object via the ROAP protocol from a rights issuer.

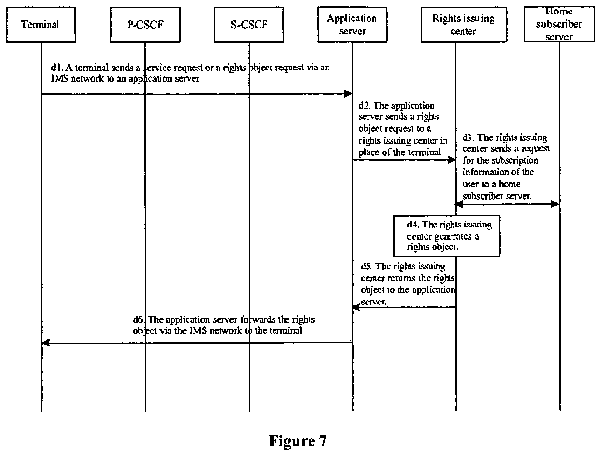

As shown in Figure 7, the method for generating and acquiring rights objects according to the fourth embodiment of the present invention includes the following steps.

In step d1, a terminal sends a user request via an IMS network to an application server. The user request may be a service request or a request for a rights object.

In step d2, the application server determines that the terminal requests a rights object and so sends a rights object request to a rights issuer in place of the terminal.

If the request received by the application server is a request for a rights object, the application server determines that the terminal requests a rights object.

If the request received by the application server is a service request, the application server may determine whether to request the rights issuer to provide a rights object according to the indication carried in the request from the terminal or according to the attribute of the requested service. If yes, the application server sends a rights object request to the rights issuer.

In step d3, the rights issuer sends a request for the subscription information of the user to a home subscriber server after receiving the rights object request. The request carries the user identity and the identities of the services the user has subscribed to. Then the home subscriber server returns the service right information of the user to the rights issuer.

In step d4, the rights issuer generates a rights object.

In step d5, the rights issuer returns the rights object to the application server.

In step d6, the application server forwards the rights object via the IMS network to the terminal. The rights object may be forwarded in a response to the user's request or in a separate SIP message such as MESSAGE or INFO.

The method for generating and acquiring rights objects according the fifth and sixth embodiments of the present invention applies to the system for generating and acquiring rights objects according to the third embodiment of the present invention. The method uses a presence server to notify a rights issuer to issue a rights object or a trigger object to a user, including the following steps: a rights issuer obtains the online state information of a user via an IMS by initiating third-party registration or subscribes to the online state information of a user from a presence server; After the user is online, the rights issuer is notified that the user is online; the rights issuer generates a rights object or a trigger object and sends the object to the terminal.

The third-party registration refers to the third-party registration initiated by an S-CSCF in place of the terminal to the rights issuer.

In the following descriptions, details are given for the embodiments of the present invention according to which a rights issuer subscribes to the online state information of a user from a presence server and obtains a notification that the user is online after the user is online.

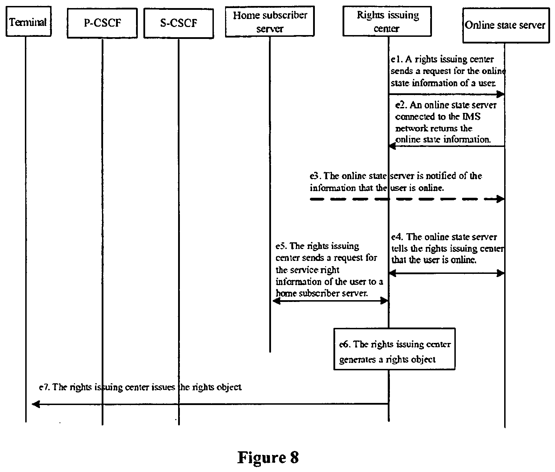

As shown in Figure 8, the method for generating and acquiring rights objects according to the fifth embodiment of the present invention includes the following steps.

In step e1, a rights issuer sends a request for the online state information of a user.

In step e2, a presence server the IMS network returns the online state information of the user. In this example, it is assumed that the user is currently offline.

In step e3, the presence server is notified of the information that the user is online. The presence server obtains the information that the user is online in a certain way, for instance, it may obtain the information through third-party registration or obtain the information when the terminal directly updates its user state information on the presence server.

In step e4, after receiving a message indicating that the user is online, the presence server may send a SIP Notify message to the rights issuer, telling the rights issuer that the user is online.

In step e5, the rights issuer sends a request for the service right information of the user to a home subscriber server.

In step e6, the rights issuer generates a rights object.

In step e7, the rights issuer issues the rights object via the IMS network or via an I2 interface using a ROAP protocol.

In steps e1 and e2, the rights issuer interacts with the presence server to obtain the online state information of the user. The online state information of the user may be acquired through a SIP Subscribe/Notify message.

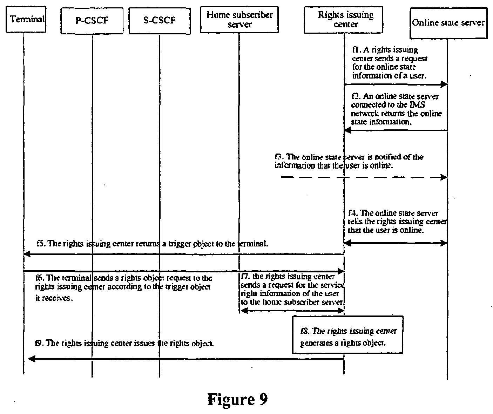

As shown in Figure 9, the method for generating and acquiring rights objects according to the sixth embodiment of the present invention includes the following steps.

In step f1, a rights issuer sends a request for the online state information of a user.

In step f2, a presence server connected to the IMS network returns the online state information of the user. In this example, it is assumed that the user is currently offline.

In step f3, the presence server is notified of the information that the user is online. The presence server obtains the information that the user is online in a certain way, for instance, it may obtain the information through third-party registration or obtain the information when the terminal directly updates its user state information on the presence server.

In step f4, after receiving a message indicating that the user is online, the presence server may send a SIP Notify message to the rights issuer, telling the rights issuer that the user is online.

In step f5, the rights issuer returns a trigger object to the terminal.

In step f6, the terminal sends a rights object request to the rights issuer according to the trigger object it receives.

In step f7, after receiving the rights object request, the rights issuer sends a request for the service right information of the user to the home subscriber server.

In step f8, the rights issuer generates a rights object.

In step f9, the rights issuer issues the rights object via the IMS network or via an I2 interface using a ROAP protocol. If the rights issuer issues the rights object via the IMS network, it may send the rights object to the terminal using a path reverse to the path on which the rights object request is sent or may send the rights object in a separate SIP message to the terminal.

In steps f1 and f2, the rights issuer interacts with the presence server to obtain the online state information of the user. The online state information of the user may be acquired through a SIP Subscribe/Notify message.

In the method for generating and acquiring rights objects according to the first embodiment through the sixth embodiment of the present invention, the home subscriber server stores relevant service configuration information. Therefore, the home subscriber server may be replaced by a separate database storing relevant service configuration information or an application server storing relevant service configuration information. The home subscriber server, the separate database and the application server are all called a service configuration informant server. The service configuration informant server may be integrated with an application server that provides services.

Concerning the embodiments of the present invention: in the above-mentioned embodiments for a method for generating and acquiring rights objects according to the present invention, if a terminal receives a trigger object, the terminal judges the content of the trigger object and performs operation according to the content of the trigger object. For instance, if the terminal receives a registration trigger object, the terminal registers itself to the rights issuer; if the terminal receives a trigger object intended for acquiring a rights object, the terminal sends a rights object request to the rights issuer. The embodiments of the present invention involve only the acquisition of rights objects. Therefore, the terminal's judgment of the content of the trigger object is omitted and it is considered by default that the terminal has received a trigger object for acquiring a rights object. In the above-mentioned embodiments for a method for generating and acquiring rights objects according to the present invention, when a rights issuer sends a rights object to a terminal, the rights issuer may send the rights object via a ROAP protocol interface to the terminal or send the rights object via the IMS to the terminal.

In sum, in the embodiments of the present invention shown in Figure 4, Figure 5, Figure 8 and Figure 9, a rights issuer obtains the online state information of a terminal via an IMS, determines that the terminal is online, obtains the service right information of the user of the terminal via the IMS, generates a rights object, and issues the rights object to the terminal. The online information of a terminal may be obtained through third-party registration. As shown in Figure 4 and Figure 5, third-party registration is initiated by an S-CSCF in the IMS in place of the terminal to the rights issuer. Alternatively, the online information of a terminal may be obtained from a presence server shown in Figure 8 and Figure 9.

In the embodiment of the present invention shown in Figure 5, after logging in to and registering itself to an IMS, a terminal may initiate a rights object request via the IMS to a rights issuer. Then the subsequent step follows. In this case, it is unnecessary for the rights issuer to know whether the terminal is online or not, just the same as the embodiments of the present invention shown in Figure 6 and Figure 7.

In the embodiments of the present invention shown in Figure 6 and Figure 7, a rights issuer obtains a rights object request via an IMS and obtains the service right information of the user of the terminal via the IMS, generates a rights object, and then issues the rights object to the terminal. The procedure for the rights issuer to obtain the rights object request may be the procedure comprising steps c1 through c5 shown in Figure 6 or the procedure comprising steps d1 through d2 shown in Figure 7. In this case, it is unnecessary for the rights issuer to know whether the terminal is online or not.

The present invention also provides a rights issuer, including a service right information acquisition unit, a rights object generation unit, and a rights object issuing unit.

The service right information acquisition unit acquires service right information from a service configuration information server in an IMS according to an indication it has received.

The rights object generation unit generates a rights object according to the service right information and a content encryption key it obtains.

The rights object issuing unit issues the rights object.

The rights issuer according to the present invention may further include a terminal state acquisition unit, which is used to obtain the online state information of a terminal from an S-CSCF in the IMS network or from a presence server connected to the IMS network and to send an acquisition indication to the service right information acquisition unit after determining that the terminal is online.

The rights issuer according to the present invention may also include an interface unit supporting an application server. The interface unit serves as a service support entity for the application server and interacts with the application server.

The rights object issuing unit may include an interface unit that interacts with an S-CSCF and/or an interface unit that interacts with the terminal.

The interface unit that interacts with an S-CSCF issues the rights object to the S-SCSF.

The interface unit that interacts with the terminal directly issues the rights object to the terminal.

The service configuration information server is a home subscriber server or a separate database, or integrated with an application server that provides services.

In the system for generating and acquiring rights objects according to the embodiments of the present invention, the generation and acquisition of rights objects is implemented as a service function or as a service support function, and a rights issuer is deployed as an application server or as a service support entity for an application server. Therefore, the present invention makes full use of all existing entities and operating mechanisms in an IMS network and provides an optimized system for generating and acquiring rights objects. Furthermore, in the method for generating and acquiring rights objects according to the embodiments of the present invention, an operating mechanism is fully utilized to trigger a service based on trigger rules between an S-CSCF and an application server in an IMS network. After a terminal is registered, the S-CSCF may initiate third-party registration to the application server. The rights issuer may be deployed as an application server or a service support entity for an application server. The acquisition of a rights object can be implemented by extending the SIP protocol in a ROAP message or encapsulating a ROAP message in a SIP tunnel. Therefore, the method according to the embodiments of the present invention is easy to implement, simple and universal.

While this invention has been particularly shown and described by reference to exemplary embodiments thereof, it will be understood by those skilled in the art that various changes in form and detail may be made therein without departing from the scope of the invention as defined by the appended claims.

## Claims

1. A method for generating rights objects in a Digital Rights Management System, **characterized by** comprising:
acquiring (e1~e4, f1~f4), by a rights issuer (110), online state information of a
terminal via an IP multimedia subsystem (IMS);
acquiring (e5, f7), by the rights issuer (110), subscriber service right information corresponding to the terminal via the IMS after determining that the terminal is online;
generating (e6, f8), by the rights issuer (110), a rights object, wherein the process of generating the rights object comprises: generating, by the rights issuer, the rights object according to the subscriber service right information and a content encryption key; and
issuing (e7, f9), by the rights issuer (110), the rights object to the terminal.

2. The method according to claim 1, wherein the process of the rights issuer acquiring the online state information of the terminal via the IMS comprises :
acquiring, by the rights issuer, the online state information of the terminal by a third-party register, wherein a service CSCF of the IMS implements the third-party register to the rights issuer.

3. The method according to claim 1, wherein the process of the rights issuer acquiring the online state information of the terminal via the IMS comprises:
acquiring, by the rights issuer, the online state information via a presence server communicating with the IMS.

4. The method according to claim 1, wherein the subscriber service right information is acquired from a service configuration information server of the IMS.

5. The method according to claim 1, wherein the process of generating the rights object comprises:
transmitting, by the rights issuer, a trigger object after determining that the terminal is online;
transmitting, by the terminal, a requesting message for obtaining the rights object according to the trigger object;
generating, by the rights issuer, the rights object according to the subscriber service right information corresponding to the terminal and a encrypt key of a acquired content.

6. The method according to claim 1 or claim 5, wherein the encrypt key of the content is stored in the rights issuer; and the method further comprises:
the rights issuer carries a content identity and obtains the encrypt key from local when the encrypt key is stored in the rights issuer.

7. The method according to claim 1 or claim 5, wherein the encrypt key of the content is stored in a key management center; and the method further comprises:
the rights issuer carries the content identity, queries the key management center, and obtains the encrypt key of the content corresponding to the service when the encrypt key is stored in the key management center.

8. A rights issuer (110) of a Digital Rights Management System, **characterized by** comprising: a terminal state obtaining unit, a subscriber service rights information obtaining unit, a rights object generating unit, and a rights object issuing unit, wherein,
the terminal state obtaining unit is configured to obtain on-line state information of a terminal via an IP multimedia subsystem (IMS);
the subscriber service rights information obtaining unit is configured to obtain subscriber service rights information corresponding to the terminal via the IMS after determining that the terminal is online;
the rights object generating unit is configured to generate a rights object according to the subscriber service right information and a content encryption key it obtains;
the rights object issuing unit is configured to issue the rights object to the terminal.

## Patentansprüche

1. Verfahren zum Erzeugen von Rechte-Objekten in einem "Digital Rights Management"-System, **dadurch gekennzeichnet, dass** es Folgendes umfasst:
Erfassen (e1~e4, f1~f4), durch einen Rechte-Ausgeber (110), von Online-Statusinformationen eines Endgeräts über ein IP-Multimediasubsystem (IMS);
Erfassen (e5, f7), durch den Rechte-Ausgeber (110), von Teilnehmerdienstrecht-Informationen, die mit dem Endgerät korrespondieren, über das IMS nach Bestimmen, dass das Endgerät online ist;
Erzeugen (e6, f8), durch den Rechte-Ausgeber (110), eines Rechte-Objekts, wobei der Prozess des Erzeugens des Rechte-Objekts Folgendes umfasst: Erzeugen, durch den Rechte-Ausgeber, des Rechte-Objekts gemäß den Teilnehmerdienstrecht-Informationen und eines Inhaltchiffrierschlüssels; und
Ausgeben (e7, f9), durch den Rechte-Ausgeber (110), des Rechte-Objekts an das Endgerät.

2. Verfahren nach Anspruch 1, wobei der Prozess, dass der Rechte-Ausgeber die Online-Statusinformationen des Endgeräts über das IMS erfasst, Folgendes umfasst:
Erfassen, durch den Rechte-Ausgeber, der Online-Statusinformationen des Endgeräts von einem Fremdregister, wobei eine Dienst-CSCF des IMS das Fremdregister für den Rechte-Ausgeber implementiert.

3. Verfahren nach Anspruch 1, wobei der Prozess, dass der Rechte-Ausgeber die Online-Statusinformationen des Endgeräts über das IMS erfasst, Folgendes umfasst:
Erfassen, durch den Rechte-Ausgeber, der Online-Statusinformationen über einen Präsenzserver, der mit dem IMS kommuniziert.

4. Verfahren nach Anspruch 1, wobei die Teilnehmerdienstrecht-Informationen von einem Dienstkonfigurationsinformationen-Server des IMS erfasst werden.

5. Verfahren nach Anspruch 1, wobei der Prozess des Erzeugens des Rechte-Objekts Folgendes umfasst:
Übertragen, durch den Rechte-Ausgeber, eines Auslöserobjekts nach Bestimmen, dass das Endgerät online ist;
Übertragen, durch das Endgerät, einer Anforderungsnachricht zum Erhalten des Rechte-Objekts gemäß dem Auslöserobjekt;
Erzeugen, durch den Rechte-Ausgeber, des Rechte-Objekts gemäß den Teilnehmerdienstrecht-Informationen korrespondierend mit dem Endgerät und einem Chiffrierschlüssel eines erfassten Inhalts.

6. Verfahren nach Anspruch 1 oder Anspruch 5, wobei der Chiffrierschlüssel des Inhalts in dem Rechte-Ausgeber gespeichert wird; und das Verfahren weiter Folgendes umfasst:
der Rechte-Ausgeber führt eine Inhalte-Identität und erhält den Chiffrierschlüssel von lokal, wenn der Chiffrierschlüssel in dem Rechte-Ausgeber gespeichert ist.

7. Verfahren nach Anspruch 1 oder Anspruch 5, wobei der Chiffrierschlüssel des Inhalts in einem Schlüsselverwaltungszentrum gespeichert wird; und das Verfahren weiter Folgendes umfasst:
der Rechte-Ausgeber führt die Inhalte-Identität, fragt das Schlüsselverwaltungszentrum ab und erhält den Chiffrierschlüssel des Inhalts korrespondierend mit dem Dienst, wenn der Chiffrierschlüssel in dem Schlüsselverwaltungszentrum gespeichert ist.

8. Rechte-Ausgeber (110) eines "Digital Rights Management"-Systems, **dadurch gekennzeichnet, dass** er Folgendes umfasst: eine Endgerätstatus-Beschaffungseinheit, eine Teilnehmerdienstrechte-Informationen-Beschaffungseinheit, eine Rechte-Objekt-Erzeugungseinheit und eine Rechte-Objekt-Ausgabeeinheit, wobei
die Endgerätstatus-Beschaffungseinheit konfiguriert ist, Online-Statusinformationen eines Endgeräts über ein IP-Multimediasubsystem (IMS) zu erhalten;
die Teilnehmerdienstrechte-Informationen-Beschaffungseinheit konfiguriert ist, Teilnehmerdienstrechte-Informationen korrespondierend mit dem Endgerät über das IMS nach Bestimmen, dass das Endgerät online ist, zu erhalten;
die Rechte-Objekt-Erzeugungseinheit konfiguriert ist, ein Rechte-Objekt gemäß den Teilnehmerdienstrechte-Informationen und eines Inhalte-Chiffrierschlüssels, den sie erhält, zu erzeugen;
die Rechte-Objekt-Ausgabeeinheit konfiguriert ist, das Rechte-Objekt an das Endgerät auszugeben.

## Revendications

1. Procédé permettant de générer des objets droits dans un système de gestion des droits numériques, **caractérisé en ce qu'**il comprend les étapes suivantes :
acquérir (e1~e4, f1~f4), par un émetteur de droits (110), des informations d'état en ligne d'un terminal par l'intermédiaire d'un sous-système multimédia IP (IMS) ;
acquérir (e5, f7), par un émetteur de droits (110), des informations de droits de service d'abonné correspondant au terminal par l'intermédiaire de l'IMS après avoir déterminé que le terminal est en ligne ;
générer (e6, f8), par l'émetteur de droits (110), un objet droits , le processus consistant à générer l'objet droits comprenant : générer, par l'émetteur de droits, l'objet droits selon les informations de droits de service d'abonné et une clé de cryptage de contenu ; et transmettre (e7, f9), par l'émetteur de droits (110), l'objet droits au terminal.

2. Procédé selon la revendication 1, dans lequel le processus consistant à acquérir les informations d'état en ligne du terminal par l'intermédiaire de l'IMS, par l'émetteur de droits, comprend l'étape suivante :
acquérir, par l'émetteur de droits, les informations d'état en ligne du terminal par un enregistrement tiers, une fonction CSCF de service de l'IMS mettant en oeuvre l'enregistrement tiers auprès de l'émetteur de droits.

3. Procédé selon la revendication 1, dans lequel le processus consistant à acquérir les informations d'état en ligne du terminal par l'intermédiaire de l'IMS, par l'émetteur de droits, comprend l'étape suivante :
acquérir, par l'émetteur de droits, les informations d'état en ligne par l'intermédiaire d'un serveur de présence communiquant avec l'IMS.

4. Procédé selon la revendication 1, dans lequel les informations de droits de service d'abonné sont acquises à partir d'un serveur d'informations de configuration de service de l'IMS.

5. Procédé selon la revendication 1, dans lequel le processus consistant à générer l'objet droits comprend :
transmettre, par l'émetteur de droits, un objet déclenchement après avoir déterminé que le terminal est en ligne ;
transmettre, par le terminal, un message de requête pour obtenir l'objet droits selon l'objet déclenchement ;
générer, par l'émetteur de droits, l'objet droits selon les informations de droits de service d'abonné correspondant au terminal et une clé de cryptage d'un contenu acquis.

6. Procédé selon la revendication 1 ou la revendication 5, dans lequel la clé de cryptage du contenu est stockée dans l'émetteur de droits ; et le procédé comprend en outre les étapes suivantes :
l'émetteur de droits contient une identité de contenu et obtient la clé de cryptage localement lorsque la clé de cryptage est stockée dans l'émetteur de droits.

7. Procédé selon la revendication 1 ou la revendication 5, dans lequel la clé de cryptage du contenu est stockée dans un centre de gestion de clés ; et le procédé comprend en outre les étapes suivantes :
l'émetteur de droits contient l'identité de contenu, interroge le centre de gestion de clés, et obtient la clé de cryptage du contenu correspondant au service lorsque la clé de cryptage est stockée dans le centre de gestion de clés.

8. Émetteur de droits (110) d'un système de gestion des droits numériques, **caractérisé en ce qu'**il comprend : une unité d'obtention d'état de terminal, une unité d'obtention d'informations de droits de service d'abonné, une unité de génération d'objets droits, et une unité d'émission d'objets droits,
l'unité d'obtention d'état de terminal étant configurée pour obtenir des informations d'état en ligne d'un terminal par l'intermédiaire d'un sous-système multimédia IP (IMS) ;
l'unité d'obtention d'informations de droits de service d'abonné étant configurée pour obtenir des informations de droits de service d'abonné correspondant au terminal par l'intermédiaire de l'IMS après avoir déterminé que le terminal est en ligne ;
l'unité de génération d'objets droits étant configurée pour générer un objet droits en fonction des informations de droits de service d'abonné et d'une clé de cryptage de contenu qu'elle obtient ;
l'unité d'émission d'objets droits étant configurée pour transmettre l'objet droits au terminal.
